(19)

Europäisches
Patentamt
European
Patent Office
Office européen
des brevets

(11)   **EP 2 905 311 A1**

(12)

# EUROPEAN PATENT APPLICATION
published in accordance with Art. 153(4) EPC

(43) Date of publication:
**12.08.2015 Bulletin 2015/33**

(21) Application number: **13844323.9**

(22) Date of filing: **17.09.2013**

(51) Int Cl.:
***C08L 27/08*** (2006.01)     ***B65D 65/02*** (2006.01)
***C08J 5/18*** (2006.01)

(86) International application number:
**PCT/JP2013/075010**

(87) International publication number:
**WO 2014/054414 (10.04.2014 Gazette 2014/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **01.10.2012   JP 2012219427**

(71) Applicant: **Kureha Corporation
Tokyo 103-8552 (JP)**

(72) Inventors:
• **IIZUKA, Hitoshi
Tokyo 103-8552 (JP)**

• **HIGUCHI, Atsuhiro
Tokyo 103-8552 (JP)**
• **SEINO, Taichi
Tokyo 103-8552 (JP)**
• **ORIKASA, Takanori
Tokyo 103-8552 (JP)**
• **MATSUZAKI, Mitsuhiro
Tokyo 103-8552 (JP)**

(74) Representative: **Zimmermann & Partner
Patentanwälte mbB
Postfach 330 920
80069 München (DE)**

(54)   **VINYLIDENE CHLORIDE-BASED COPOLYMER RESIN COMPOSITION AND WRAP FILM**

(57)   An object of the present invention is to provide: an extrudable vinylidene chloride-based copolymer resin composition having reduced odor and excellent cuttability when the resin composition is made into a wrap film; and a wrap film made of the resin composition.

In the vinylidene chloride-based copolymer resin composition of the present invention, when the resin composition is in a form of a film and when the film is subjected to methanol extraction, the methanol extraction amount is from 3.0 mass% to 7.0 mass%.

EP 2 905 311 A1

**Description**

TECHNICAL FIELD

The present invention relates to resin compositions for extrusion molding vinylidene chloride-based copolymer resins, and wrap films made of the same. In particular, the present invention relates to resin compositions having reduced odor and excellent cuttability when the resin compositions are made into wrap films, and containing less amount of added liquid additives. "Cuttability" refers to the degree of ease in cutting a wrap film. More specifically, "cuttability" refers to the tendency of the wrap film to be broken and tore off when the wrap film is wound off from a carton and cut by a blade attached to the carton.

BACKGROUND ART

Vinylidene chloride-based copolymer resin compositions have been used as wrap films for food packaging due to their excellent gas/water vapor barrier properties and/or transparency. However, the vinylidene chloride-based copolymer resin compositions are difficult to mold since the melting temperature and decomposition temperature thereof are close each other.
As a method of enhancing the processability of the vinylidene chloride-based copolymer resin composition, a method of adding liquid additives such as liquid plasticizers and liquid stabilizers has been known (e.g. see Patent Document 1).
Furthermore, wrap films are required to be adhesive (self-adhesive). As a method of enhancing the adhesiveness, a method of adding a mineral oil having a particular molecular weight distribution and a particular number average molecular weight has been known (e.g. Patent Document 2). A method of adding polybutene or polybutadiene as an adhesive agent and adding liquid paraffin or a surfactant as an adhesion imparting agent has been also known (e.g. see Patent Document 3). The adhesive agent and the adhesion imparting agent could be liquid additives.

CITATION LISTS

Patent Literatures

Patent Document 1: Japanese Unexamined Patent Application Publication No. H11-71492
Patent Document 2: Japanese Unexamined Patent Application Publication No. H10-87876
Patent Document 3: Japanese Unexamined Patent Application Publication No. H10-324809

SUMMARY OF INVENTION

Technical Problem

Excessive adding of liquid additives such as plasticizers and stabilizers, in order to impart melt-extrudability, also results in imparting pliability when a wrap film is formed. Wrap films with excessive pliability cause a problem in that the wrap film is hard to cut since the wrap film stretches when being cut.
It is conceived that the degree of cuttability is affected by various factors including stress-strain characteristics (pliability and elongation), direction and degree of molecular orientation, and other factors of the film; however, the relationship between these factors and sensory evaluation results has not been completely made clear, and further improvement in cuttability has been demanded.
Excessive adding of liquid additives may also cause odor and bleeding in wrap films.
Therefore, it is necessary to add liquid additives to increase processability of a wrap film while good cuttability and reduced odor (hereinafter, also referred to as "degree of odor") are required for the wrap film.
Therefore, an object of the present invention is to provide an extrudable vinylidene chloride-based copolymer resin composition having reduced odor and excellent cuttability; and a wrap film made of the resin composition.

Solution to Problem

As a result of diligent research for achieving excellent cuttability and degree of odor, the present inventors have found that a wrap film with excellent processability, cuttability, and degree of odor can be obtained by adjusting the methanol extraction amount of the molded film to be within a particular range, and thus completed the present invention.

The vinylidene chloride-based copolymer resin composition according to the present invention is a vinylidene chloride-based copolymer resin composition in which a methanol extraction amount is from 3.0 mass% to 7.0 mass% when the resin composition is in a form of a film and when the film is subjected to methanol extraction.

In the vinylidene chloride-based copolymer resin composition according to the present invention, the vinylidene chloride-based copolymer resin composition is preferably a vinylidene chloride-vinyl chloride copolymer resin composition.

In the vinylidene chloride-based copolymer resin composition according to the present invention, a total content of liquid additives is preferably from 3.0 mass% to 7.0 mass%.

The wrap film according to the present invention is a wrap film formed from the vinylidene chloride-based copolymer resin composition of the present invention.

Advantageous Effects of Invention

The present invention can provide an extrudable vinylidene chloride-based copolymer resin composition having reduced odor and excellent cuttability; and a wrap film made of the resin composition.

Description of Embodiments

The present invention will now be described in detail with reference to embodiments, but the present invention is not limited by these descriptions. As long as an embodiment exhibits the effect of the present invention, various modifications may be added to the embodiment.

When the vinylidene chloride-based copolymer resin composition according to the present embodiment is in a form of a film and when the film is subjected to methanol extraction, a methanol extraction amount is from 3.0 mass% to 7.0 mass%.

The vinylidene chloride-based copolymer resin composition according to the present embodiment comprises (1) a vinylidene chloride-based copolymer which is the main component and (2) additives which are compounded as necessary.

When the vinylidene chloride-based copolymer resin composition according to the present embodiment is subjected to film molding, a part of the volatile components in the composition volatilizes due to the heat added during molding. When methanol extraction is performed on the molded film, mostly additives, such as plasticizers, adhesive agents, adhesion imparting agents, and stabilizers, are extracted in the methanol. The methanol-extracted additives are mostly liquid additives.

Conventionally, physical properties of molded products such as wrap films have been adjusted by compounding additives, such as plasticizers, adhesive agents, adhesion imparting agents, and stabilizers, in the vinylidene chloride-based copolymer resin composition. It is possible to obtain a film that is suitable as a wrap film for food packaging and that has reduced odor, excellent cuttability of the film, and excellent processability by adjusting the methanol extraction amount to be from 3.0 mass% to 7.0 mass%. The methanol extraction amount is preferably from 6.0 mass% to 7.0 mass%. When the methanol extraction amount is less than 3.0 mass%, extrusion processability will be poor, and increase in load on the extruder will make it easy to decompose the film. When the methanol extraction amount exceeds 7.0 mass%, cuttability and degree of odor may be poor, although extrusion processability will be good. Also, bleeding of liquid additives may be readily caused.

In the vinylidene chloride-based copolymer resin composition according to the present invention, the total content of additives, particularly liquid additives, in the resin composition is preferably from 3.0 mass% to 7.0 mass%, and more preferably from 6.0 mass% to 7.0 mass%. When the total added amount of liquid additives is less than 3.0 mass%, extrusion processability will be poor, and increase in load on the extruder will make it easy to decompose the film. When the total added amount of liquid additives exceeds 7.0 mass%, cuttability and degree of odor may be poor, although extrusion processability will be good. Also, bleeding of liquid additives may be readily caused.

The vinylidene chloride-based copolymer contains from 60 to 98 parts by mass of vinylidene chloride, and from 2 to 40 parts by mass of at least one type of monomer that is copolymerizable with vinylidene chloride. Examples of the monomer that is copolymerizable with vinylidene chloride include vinyl chloride, alkyl acid esters in which an alkyl group has from 1 to 8 carbons, methacrylates in which an alkyl group has from 1 to 8 carbons, vinyl esters of aliphatic carboxylic acid, unsaturated aliphatic carboxylic acids, and the like; and a vinyl chloride, methyl acrylate, or butyl acrylate are preferably used as the monomer. The method of producing vinylidene chloride-based copolymer typically includes a suspension polymerization method and/or an emulsion polymerization method. A suspension polymerization method is preferable.

The content of vinylidene chloride in the vinylidene chloride-based copolymer that is used is preferably 70 mass% or greater and more preferably 80 mass% or greater from the perspective of balance between extrusion processability and gas barrier properties at the time of molding a film.

Reduced viscosity of the vinylidene chloride-based copolymer that is used is preferably 0.042 or greater. When the reduced viscosity is less than 0.042, strength of the film may be insufficient.

Publicly known additives such as plasticizers, stabilizers, adhesive agents, adhesion imparting agents, pigments, lubricants, antioxidants, fillers, surfactants, and the like can be compounded as the additives. Specifically, examples of the liquid plasticizer include acetyl tributyl citrate (ATBC), dibutyl sebacate cetyltributyl citrate, glycerin diacetyl monolaurate (GDAML), dibutyl sebacate (DBS), dioctyl sebacate or diacetylated monoglyceride (DALG). Examples of the adhesive agent include polyhydric alcohols that are liquid at room temperature (25°C), such as polybutene (PB), polyethylene glycol, polyglycerin, and polypropyrene glycol. Examples of the adhesion imparting agent that is liquid at room temperature include sorbitan fatty acid esters, propylene glycol fatty acid esters, and glycerin fatty acid esters (e.g. surfactants such as sorbitan mono(tri)oleate and glycerin mono(tri)oleate), paraffin-based or cycloparaffin-based liquid saturated hydrocarbons (e.g. naphthene-based process oil and liquid paraffin (LP, mineral oil)), and the like. Examples of the liquid stabilizer include epoxidized oils, such as epoxidized soy bean oil (ESBO) and epoxidized linseed oil (ELO), and other stabilizers such as amide derivatives of alkyl esters, magnesium hydroxide, and tetrasodium pyrophosphate. Examples of the lubricant include waxes such as polyethylene oxide and paraffin wax. Examples of the filler include silicon oxide and calcium carbonate. Examples of the surfactant include sorbitan fatty acid esters and the like.

In the present embodiment, dibutyl sebacate (DBS) is preferably not contained as the liquid plasticizer. Although dibutyl sebacate is an additive that can highly improve processability even when a small amount of dibutyl sebacate is added, degree of odor is unsatisfactory. The present embodiment preferably does not contain dibutyl sebacate, and the methanol extraction amount in the present embodiment is preferably from 3.0 mass% to 7.0 mass%. Furthermore, the present embodiment more preferably does not contain dibutyl sebacate, and the total content of liquid additives in the present embodiment is more preferably from 3.0 mass% to 7.0 mass%.

The wrap film according to the present embodiment is formed from the vinylidene chloride-based copolymer resin composition of the present embodiment and thus exhibits excellent cuttability and degree of odor.

The method of producing the vinylidene chloride-based copolymer resin composition according to the present embodiment will be described below. This production method is an example, and the method is not limited to this method. The vinylidene chloride-based copolymer is synthesized by, in the presence of a catalyst, suspension polymerization after predetermined compounding proportions of vinylidene chloride (VD) and vinyl chloride (VC), which are the raw materials for polymerization, are mixed.

The vinylidene chloride-based copolymer resin composition according to the present embodiment is molded into a stretched or unstretched film, sheet, wrap film, or the like by melt extrusion. Examples of the molding method include methods that are publicly known to those who skilled in the art, such as inflation extrusion molding method using a circular die. Furthermore, it is also possible to arrange the obtained film as a gas barrier layer and form a multi-layer film or sheet via a coextrusion and/or lamination. Examples

The present invention will now be described in further detail with reference to examples, but the present invention is not limited by these examples.

Measurement method

Reduced viscosity

In 50 mL of tetrahydrofuran, 1 g of vinylidene chloride-based copolymer resin composition was added and dissolved at 40°C. After the mixture was filtered, polymer was deposited by methanol, washed, and dried. Thereafter, 80 mg of this dried polymer was weighed, and 20 mL of cyclohexanone at 30°C was added therein as a solvent. The mixture was heated at 70°C for 60 minutes to dissolve the polymer. After being cooled at room temperature, the mixture was filtered using a filter paper, and thus a sample solution for solution viscosity measurement was obtained. Reduced viscosity was determined by placing 5 mL of the sample solution in an Ubbelohde viscometer, leaving the viscometer in a thermostatic chamber at 30°C for 5 minutes, measuring the time (sec) required to flow using a conventional method, and then performing a calculation using the following equation (Mathematical 1).

$$\text{(Mathematical 1) Reduced viscosity} = (1/4) \times \{(T_2/T_1)-1\}$$

$T_1$: Time required to flow cyclohexanone (solvent) at 30°C (sec)
$T_2$: Time required to flow sample solution at 30°C (sec)

Methanol extraction amount

In 100 mL of tetrahydrofuran (THF) at 60°C, 5 g of sample (film) was dissolved by immersing. While the THF solution in which the sample was dissolved was being stirred, 500 mL of methanol was added dropwise to reprecipitate the sample. After dying up the solvent in this mixed solution at 90°C, 50 mL of methanol was added. The mixture, including the reprecipitated sample, was placed in a Soxhlet extractor, and a piece of cotton wool was placed on the top. Thereafter, in a 150 mL flat-bottom flask which was dried and weighed the mass in advance, 70 mL of methanol was placed. The flat-bottom flask was attached to the Soxhlet extractor, and extraction was performed at 85°C for 24 hours. The flat-bottom flask was then removed, and after the solvent was dried up at 90°C, the flat-bottom flask was dried for 1 hour in a dryer with the temperature adjusted to 105°C and allowed to cool in a desiccator for 1 hour. The mass of the flask with the extracted product was determined. The methanol extraction amount was determined by the following equation (Mathematical 2).

$$\text{(Mathematical 2) Methanol extraction amount (\%)} = (B-A) / C \times 100\%$$

A: Mass of flask (g)
B: Mass of flask with extracted product (g)
C: Mass of sample (g) (the mass of the sample was 5 g)

Cuttability of film

The film was wound around a paper tube (external diameter: 36 mm; length: 308 mm) and placed in a carton for a wrap film (product name: Krewrap®; commercially available carton in 2011 with a V-shaped cutter). The film was unwound and cuttability was evaluated. Five evaluators performed the evaluation. Each evaluator reported a score (easy to cut: 3 points, average: 2 points, and hard to cut: 1 point), and an average value of the scores from the five evaluators was determined.

○: 2.6 points or greater (excellent for practical use)
Δ: 2 points or greater but less than 2.6 points (not suitable for practical use)
×: less than 2 points (not suitable for practical use)

Degree of odor of film

The film was cut into a strip form (10 mm x 50 mm) and placed in an odorless jar (volume: 500 mL) up to about 80% the volume at a density such that the films were not compressed. The jar was then capped. This jar was placed in a Geer oven with the temperature set at 80°C, and removed after 30 minutes. The jar was opened before it was cooled, and the degree of odor was evaluated. Five evaluators performed the evaluation. Each evaluator reported a score (little odor was noticed: 3 points, odor was noticed: 2 points, and strong odor was noticed: 1 point), and an average value of the scores from the five evaluators was determined.

○: 2.6 points or greater (excellent for practical use)
Δ: 2 points or greater but less than 2.6 points (not suitable for practical use)
×: less than 2 points (not suitable for practical use)

(Working Example 1)

Vinylidene chloride (VD) and vinyl chloride (VC) were mixed at a ratio of vinylidene chloride:vinyl chloride = 82:18 (mass ratio), as monomers to be polymerized, and suspension-polymerized. To this polymer resin (vinylidene chloride-based copolymer), a total content of 6.66 mass% of ATBC, DALB, ESBO, and LP, as additives, was added and mixed to form a compound (vinylidene chloride copolymer resin composition). Thereafter, the compound was melt-extruded in a ring shape at a resin temperature of about 185°C using a single screw extruder and rapidly cooled in a cooling chamber at 10°C. Thereafter, the compound was subjected to inflation biaxial stretching at room temperature and slitten to produce a film having a thickness of 10 μm and a width of 300 mm. Reduced viscosity of the polymer resin and methanol extraction amount of the sample film were measured. The results are shown in Table 1. Furthermore, film moldability (possible or not possible), cuttability, and degree of odor were evaluated. The results are shown in Table 1.

(Working Example 2)

Polymer resin was produced using a mass ratio of VD:VC = 83:17. To this polymer resin (vinylidene chloride-based copolymer), a total content of 6.73 mass% of ATBC, DALB, ESBO, LP, and PB, as additives, was added and mixed to form a compound (vinylidene chloride copolymer resin composition). Film was produced and evaluated in the same manner as in Working Example 1.

(Comparative Example 1)

Polymer resin was produced using a mass ratio of VD:VC = 82:18. To this polymer resin (vinylidene chloride-based copolymer), a total content of 7.76 mass% of ATBC, DALB, ESBO, and LP, as additives, was added and mixed to form a compound (vinylidene chloride copolymer resin composition). Film was produced and evaluated in the same manner as in Working Example 1.

(Comparative Example 2)

Polymer resin was produced using a mass ratio of VD:VC = 82:18. To this polymer resin (vinylidene chloride-based copolymer), a total content of 7.84 mass% of ATBC, DALB, ESBO, LP, and PB, as additives, was added and mixed to form a compound (vinylidene chloride copolymer resin composition). Film was produced and evaluated in the same manner as in Working Example 1.

(Comparative Example 3)

Polymer resin was produced using a mass ratio of VD:VC = 82:18. To this polymer resin (vinylidene chloride-based copolymer), a total content of 2.8 mass% of ATBC, DALB, ESBO, and LP, as additives, was added and mixed to form a compound (vinylidene chloride copolymer resin composition). Film was produced in the same manner as in Working Example 1; however, film was not obtained due to decomposition.

[Table 1]

|  | VD:VC | Reduced viscosity | Film processing (possible/not possible) | Methanol extraction amount (mass%) | Cuttability of film | Degree of odor of film |
|---|---|---|---|---|---|---|
| Working Example 1 | 82:18 | 0.044 | Possible | 6.1 | 2.8 | 2.8 |
| Working Example 2 | 83:17 | 0.042 | Possible | 6.2 | 2.6 | 2.6 |
| Comparative Example 1 | 82:18 | 0.044 | Possible | 7.3 | 2.2 | 2.2 |
| Comparative Example 2 | 82:18 | 0.044 | Possible | 7.4 | 2.2 | 2.0 |
| Comparative Example 3 | 82:18 | 0.044 | Not possible | Not evaluated | Not evaluated | Not evaluated |

Working Examples 1 and 2 had excellent extrusion processability, cuttability, and degree of odor. Comparative Examples 1 and 2 showed the methanol extraction amount of greater than 7.0 mass%, and had poor cuttability and degree of odor. In Comparative Example 3, the resin composition was decomposed during the extrusion processing, and no film was obtained. It is assumed that the methanol extraction amount of Comparative Example 3 was less than 3.0 mass%.

**Claims**

1. A vinylidene chloride-based copolymer resin composition, wherein
   a methanol extraction amount is from 3.0 mass% to 7.0 mass% when the resin composition is in a form of a film and when the film is subjected to methanol extraction.

2. The vinylidene chloride-based copolymer resin composition according to claim 1, wherein the vinylidene chloride-based copolymer resin composition is a vinylidene chloride-vinyl chloride copolymer resin composition.

3. The vinylidene chloride-based copolymer resin composition according to claim 1 or 2, wherein a total content of liquid additives is from 3.0 mass% to 7.0 mass%.

4. A wrap film formed from the vinylidene chloride-based copolymer resin composition described in any one of claims 1 to 3.

## INTERNATIONAL SEARCH REPORT

| International application No. |
| --- |
| PCT/JP2013/075010 |

**A. CLASSIFICATION OF SUBJECT MATTER**
*C08L27/08*(2006.01)i, *B65D65/02*(2006.01)i, *C08J5/18*(2006.01)i

According to International Patent Classification (IPC) or to both national classification and IPC

**B. FIELDS SEARCHED**

Minimum documentation searched (classification system followed by classification symbols)
C08L27/08, B65D65/02, C08J5/18

Documentation searched other than minimum documentation to the extent that such documents are included in the fields searched
Jitsuyo Shinan Koho          1922-1996     Jitsuyo Shinan Toroku Koho     1996-2013
Kokai Jitsuyo Shinan Koho    1971-2013     Toroku Jitsuyo Shinan Koho     1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 08-134306 A  (Asahi Chemical Industry Co., Ltd.), 28 May 1996 (28.05.1996), claims; paragraphs [0032], [0035], [0038]; examples; comparative examples (Family: none) | 1-4 |
| X | JP 10-330625 A  (Kureha Chemical Industry Co., Ltd.), 15 December 1998 (15.12.1998), claims; paragraphs [0011], [0013]; examples; comparative examples (Family: none) | 1-4 |

[×] Further documents are listed in the continuation of Box C.          [ ] See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered  to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 28 October, 2013 (28.10.13) | 05 November, 2013 (05.11.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/075010 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2011-094035 A  (Kureha Corp.), 12 May 2011 (12.05.2011), claims; paragraphs [0003], [0034], [0035]; examples; comparative examples & CN 102051009 A | 1-4 |
| X | JP 07-076643 A  (W.R. Grace & Co.-Conn.), 20 March 1995 (20.03.1995), claims; paragraphs [0002], [0021]; examples; comparative examples<br>& US 5843581 A          & EP 627465 A1<br>& WO 1994/029384 A1   & DE 69322263 C<br>& DE 69322263 D       & NO 942082 A<br>& AT 173748 E         & NZ 260564 A<br>& PL 303703 A         & AU 6325994 A<br>& FI 942648 A         & BR 9402142 A<br>& IL 109900 A         & ZA 9403829 A<br>& AT 173748 T         & CA 2163014 A<br>& DK 627465 T         & RU 94019982 A<br>& AU 681877 B         & FI 942648 A0 | 1-4 |
| X | JP 07-179703 A  (Asahi Chemical Industry Co., Ltd.), 18 July 1995 (18.07.1995), comparative examples 12, 13<br>& US 5446101 A          & EP 639617 A1<br>& WO 1994/020572 A1   & DE 69404574 D<br>& DE 69404574 T       & ES 2104357 T<br>& CN 1103535 A        & CN 1215739 A | 1-4 |
| X | JP 10-324809 A  (Kureha Chemical Industry Co., Ltd.), 08 December 1998 (08.12.1998), claims; paragraphs [0002], [0007], [0009], [0010], [0012]; examples; comparative examples<br>& TW 467935 B          & KR 10-0260990 B<br>& CN 1194279 A        & CN 1446847 A | 1-4 |
| X | JP 11-071492 A  (Kureha Chemical Industry Co., Ltd.), 16 March 1999 (16.03.1999), claims; paragraphs [0002], [0007], [0013], [0014]; examples; comparative examples & CN 102321320 A | 1-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1171492 B
- JP H1087876 B
- JP H10324809 B